(19) Europäisches Patentamt

European Patent Office

Office européen des brevets

(11) **EP 1 229 162 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(51) Int Cl.:
*D06L 1/06* *(2006.01)*    *D06L 1/14* *(2006.01)*
*D21H 13/26* *(2006.01)*    *C08J 11/00* *(2006.01)*

(21) Anmeldenummer: **01102295.1**

(22) Anmeldetag: **01.02.2001**

(54) **Verfahren zur Entfernung einer wasserunlöslichen Ausrüstung von Aramidfasern**

Method for removing a water insoluble finish from aramid fibres

Procédé pour éliminer un revêtement insoluble dans l'eau des fibres en aramide

(84) Benannte Vertragsstaaten:
**AT BE CH CY DE DK ES FI FR GB GR IE IT LI LU MC NL PT SE TR**

(43) Veröffentlichungstag der Anmeldung:
**07.08.2002 Patentblatt 2002/32**

(73) Patentinhaber: **Teijin Twaron GmbH**
**42103 Wuppertal (DE)**

(72) Erfinder: **Schmitt, Michael-Heinrich, Dr.**
**40627 Düsseldorf (DE)**

(74) Vertreter: **Fett, Günter et al**
**CPW GmbH**
**Kasinostrasse 19 - 21**
**42103 Wuppertal (DE)**

(56) Entgegenhaltungen:
• **DATABASE WPI Section Ch, Week 199236 Derwent Publications Ltd., London, GB; Class A18, AN 1992-295982 XP002171834 & JP 04 202853 A (TORAY IND INC), 23. Juli 1992 (1992-07-23)**
• **DATABASE WPI Section Ch, Week 199601 Derwent Publications Ltd., London, GB; Class A23, AN 1996-007006 XP002171835 & JP 07 286061 A (TEIJIN LTD), 31. Oktober 1995 (1995-10-31)**
• **DATABASE WPI Section Ch, Week 199438 Derwent Publications Ltd., London, GB; Class D16, AN 1994-307895 XP002171836 & JP 06 235163 A (SAMSON KK), 23. August 1994 (1994-08-23)**

**Beschreibung**

Die vorliegende Erfindung betrifft ein Verfahren zur Entfernung einer wasserunlöslichen Ausrüstung von Aramidfasern.

Aramidfasern sind im Vergleich zu anderen synthetischen Fasern teuer. Daher lohnt es sich, die Fasern nach ihren Gebrauch wiederzuverwerten. Oft sind die Aramidfasern mit einer wasserunlöslichen Ausrüstung, z.B. mit einer vernetzten waterblocking Ausrüstung oder mit einer waterrepellant Ausrüstung versehen. Vernetzte waterblocking Ausrüstungen bestehen bekanntlich aus Verbindungen, die in Kontakt mit Wasser lediglich quellen. Waterrepellant Ausrüstungen bestehen bekanntlich aus Verbindungen, die Wasser abweisen. Sind die Aramidfasern mit einer vernetzten waterblocking oder waterrepellant Ausrüstung versehen, sind die Fasern erst dann einer Wiederverwertung zugänglich, wenn die ebengenannte Ausrüstung entfernt wird.

JP-A-59 106 570 schlägt zur Entfernung der waterrepellant Ausrüstung von Textilien die Behandlung der Fasern in einem Niedertemperaturplasma vor. Jedoch ist dieses Verfahren wegen der dazu notwendigen Vakuumapparatur aufwendig.

JP-A-04 202 853 lehrt zur Entfernung der waterrepellant Ausrüstung von Aramidfasern die Behandlung der Fasern durch mechanisches Abreiben mit einem Nadeltuch oder mit Schmirgelpapier, bevorzugt aber durch Sandstrahlen. Durch diese Verfahren besteht jedoch die Gefahr, dass die Aramidfaser beschädigt wird. Ferner erwähnt JP-A-04 202 853 das Eluieren mit einem Lösungsmittel, gibt jedoch keinerlei Hinweis auf die Art des Lösungsmittels. Der Fachmann muss also zuerst einmal herausfinden, mit welcher waterrepellant Ausrüstung die Aramidfasern versehen sind. Danach muss er ein Lösungsmittel finden, worin diese waterrepellant Ausrüstung löslich ist und schließlich darf dieses Lösungsmittel die Aramidfaser nicht lösen.

Daher stellt sich die vorliegende Erfindung die Aufgabe, ein Verfahren zur Entfernung einer vernetzten waterblocking oder waterrepellant Ausrüstung von Aramidfasern zur Verfügung zu stellen, das einfach durchzuführen ist und die Aramidfasern nicht beschädigt.

Diese Aufgabe wird durch ein Verfahren zur Entfernung einer wasserunlöslichen Ausrüstung von Aramidfasern gelöst, das dadurch gekennzeichnet ist, dass die Aramidfasern als Kurzschnitt, Wirrfaser oder textiles Flächengebilde vorliegen und mit einem Mittel behandelt werden, das mindestens ein hydrophiles Fluid enthält. Dabei bedeutet im Rahmen der vorliegenden Erfindung der Begriff hydrophiles Fluid eine hydrophile Flüssigkeit oder ein hydrophiles Gas. Ferner bedeutet im Rahmen der vorliegenden Erfindung behandelt werden, dass die Aramidfasern einmal oder mehrmals mit dem Mittel behandelt werden, das mindestens ein hydrophiles Fluid enthält.

Durch das erfindungsgemäße Verfahren wird die wasserunlösliche Ausrüstung zumindest in dem Maße von den Aramidfasern entfernt, dass die erfindungsgemäß behandelten Fasern wiederverwertet werden können.

Dass die Entfernung einer wasserunlöslichen Ausrüstung von Aramidfasern ausgerechnet mit einem hydrophilen Fluid gelingt, muss überraschen, weil sich wasserunlösliche Ausrüstungen bekanntlich gerade dadurch auszeichnen, dass sie gegen die Auflösung durch ein hydrophiles Fluid resistent sind.

In einer bevorzugten Ausführungsform des erfindungsgemäßen Verfahrens ist die wasserunlösliche Ausrüstung der Aramidfasern eine vernetzte waterblocking Ausrüstung, z.B. ein durch ionische und/oder kovalente Vernetzung unlöslich gemachtes Acrylamin, Acrylamid, Natriumacrylat oder Dialkylaminoethylmethacrylat, oder eine vernetzte Polyacrylsäure oder ein vernetztes Copolymer, das Acrylamid, Carboxylgruppen und Sulfogruppen enthaltende Monomere umfasst, wie z.B. ein vernetztes mit NaOH teilneutralisiertes Terpolymer, das aus den Monomeren Acrylsäure, Natriumacrylat, Acrylamid und dem Natriumsalz der Vinylsulfonsäure zusammengesetzt ist und von der Fa. Stockhausen unter dem Namen Intrasol AFW erhältlich ist.

In einer weiteren bevorzugten Ausführungsform des erfindungsgemäßen Verfahrens ist die wasserunlösliche Ausrüstung der Aramidfasern eine waterrepellant Ausrüstung, z.B. eine Fluor-Kohlenstoff - Verbindung, wie sie zum Imprägnieren von textilen Flächengebilden, wie etwa von Geweben, eingesetzt wird.

Als Aramidfasern können im erfindungsgemäßen Verfahren Fasern aus allen bekannten aromatischen Polyamiden eingesetzt werden, wobei die Aramidfasern bevorzugt aus m-Aramid, wie z.B. Technora® von Teijin, oder aus p-Aramid, wie z.B. Twaron® von Twaron Products, bestehen.

Als hydrophiles Fluid kann im erfindungsgemäßen Verfahren grundsätzlich jedes hydrophile Fluid eingesetzt werden, sofern es die Aramidfaser nicht löst, z.B. solche hydrophile Lösungsmittel, welche die Aramidfasern nicht lösen.

Vorzugsweise wird im erfindungsgemäßen Verfahren als hydrophiles Fluid Wasser eingesetzt, wobei die Entfernung der wasserunlöslichen Ausrüstung bereits mit Wasser bei Raumtemperatur gelingt.

Vorzugsweise hat im erfindungsgemäßen Verfahren das Wasser eine Temperatur im Bereich von 60 bis 120 °C, besonders bevorzugt eine Temperatur im Bereich von 85 bis 110 °C und insbesondere eine Temperatur von etwa 100 °C. Je höher die Temperatur gewählt wird, desto schneller verläuft die Entfernung der Ausrüstung und es entsteht umso weniger oder sogar kein Schaum, wie z.B. beim Arbeiten mit etwa 100 °C heißem Wasser. Bei Temperaturen, bei denen die Schaumentwicklung stört, wie z.B. bei Raumtemperatur, kann ein Entschäumer eingesetzt werden.

Als weiteres hydrophiles Fluid wird im erfindungsgemäßen Verfahren Dimethylsulfoxid oder eine Lösung von Dimethylsulfoxid in Wasser bevorzugt eingesetzt, wobei die Konzentration des Dimethylsulfoxids in Wasser vorzugsweise 30 bis 100 Gew.-% und besonders bevorzugt 70 bis 100 Gew.-% beträgt.

Die Entfernung der wasserunlöslichen Ausrüstung gelingt mit Dimethylsulfoxid oder mit seiner wässrigen Lösung bereits bei Raumtemperatur, wobei jedoch die Temperatur des Dimethylsulfoxids oder seiner wässrigen Lösung vorzugsweise 20 bis 140 °C und besonders bevorzugt 70 bis 110 °C beträgt, weil dadurch die Behandlungsdauer verkürzt wird.

Ferner wird im erfindungsgemäßen Verfahren als hydrophiles Fluid eine wässrige Lösung eines aliphatischen cyclischen Esters mit 2 bis 4 Alkylengruppen bevorzugt eingesetzt, wobei der aliphatische cyclische Ester besonders bevorzugt χ-Butyrolacton ist.

Die Konzentration des aliphatischen cyclischen Esters in Wasser beträgt im erfindungsgemäßen Verfahren vorzugsweise 30 bis 80 Gew.-%, besonders bevorzugt 50 bis 70 Gew.-%.

Die Entfernung der wasserunlöslichen Ausrüstung gelingt mit einer wässrigen Lösung eines aliphatischen cyclischen Esters mit 2 bis 4 Alkylengruppen bereits bei Raumtemperatur, wobei jedoch die Temperatur der wässrigen Lösung des aliphatischen cyclischen Esters mit 2 bis 4 Alkylengruppen vorzugsweise 20 bis 90 °C und besonders bevorzugt 60 bis 90 °C beträgt, weil dadurch die Behandlungsdauer verkürzt wird.

Des weiteren wird im erfindungsgemäßen Verfahren als hydrophiles Fluid eine wässrige Lösung mindestens eines aliphatischen Alkohols mit 1 bis 5 Kohlenstoffatomen bevorzugt eingesetzt, wobei als aliphatischer Alkohol besonders bevorzugt Methanol, Ethanol, 1-Propanol, Isopropylalkohol, 1-Butanol, Isobutylalkohol, 2-Butanol, tert. Butanol, 1-Pentanol, 2-Pentanol, 3-Pentanol oder 2,2-Dimethyl-1-propanol einzeln oder im Gemisch eingesetzt wird.

Die Konzentration des aliphatischen Alkohols in Wasser beträgt im erfindungsgemäßen Verfahren vorzugsweise 25 bis 70 Gew.-%, besonders bevorzugt 40 bis 70 Gew.-%.

Die Entfernung der wasserunlöslichen Ausrüstung gelingt mit einer wässrigen Lösung mindestens eines aliphatischen Alkohols mit 1 bis 5 Kohlenstoffatomen bereits bei Raumtemperatur, wobei jedoch die Temperatur der wässrigen Lösung des mindestens einen aliphatischen Alkohols mit 1 bis 5 Kohlenstoffatomen vorzugsweise 20 bis 60 °C und besonders bevorzugt 40 bis 60 °C beträgt, weil dadurch die Behandlungsdauer verkürzt wird.

Im erfindungsgemäßen Verfahren kann die Behandlung der mit einer wasserunlöslichen Ausrüstung versehenen Aramidfasern grundsätzlich auf jede Weise durchgeführt werden, die gewährleistet, dass das mindestens eine hydrophile Lösungsmittel die Aramidfasern erreichen kann.

Vorzugsweise wird im erfindungsgemäßen Verfahren die mit der wasserunlöslichen Ausrüstung versehene Aramidfaser in mindestens einem hydrophilen Lösungsmittel, das gegebenenfalls einen Entschäumer enthält, gerührt, weil diese Art der Behandlung besonders einfach, z.B. in einem Rührreaktor, durchzuführen ist.

Ein weiteres einfach durchzuführendes und daher erfindungsgemäß bevorzugtes Behandlungsverfahren besteht darin, dass die Aramidfasern im Waschgang einer Waschmaschine behandelt werden.

Ebenfalls einfach durchzuführen und daher erfindungsgemäß bevorzugt ist ein Behandlungsverfahren, in dem die Aramidfasern als textiles Flächengebilde vorliegen und mit einem Wasserdampfstrahl behandelt werden.

Das Gewichtsverhältnis der Aramidfasern zu dem mindestens einen hydrophilen Fluid lässt sich im erfindungsgemäßen Verfahren in weiten Grenzen einstellen, wobei einerseits ein zu großer Überschuss an Fluid bezogen auf die Aramidfasern vermieden werden soll, um den Fluidverbrauch in Grenzen zu halten und andererseits ein Unterschuss an Fluid bezogen auf die Aramidfasern vermieden werden soll, weil dann die wasserunlösliche Ausrüstung nicht in ausreichendem Maß oder nicht schnell genug entfernt wird. Bevorzugt beträgt im erfindungsgemäßen Verfahren das Gewichtsverhältnis von Aramidfasern zu dem mindestens einen hydrophilen Fluid 1:14 bis 1:1, besonders bevorzugt 1: 14 bis 1:6.

Im erfindungsgemäßen Verfahren tritt bei einigen Kombinationen aus wasserunlöslicher Ausrüstung, hydrophilern Fluid und Temperatur Schaumentwicklung auf. Wenn die Schaumentwicklung ein störendes Ausmaß annimmt, kann im erfindungsgemäßen Verfahren das Mittel, mit dem die Aramidfasern behandelt werden, einen Entschäumer enthalten. Der Entschäumer beschleunigt im erfindungsgemäßen Verfahren die Entfernung der wasserunlöslichen Ausrüstung geringfügig, ohne die Eigenschaften der aus dem erfindungsgemäßen Verfahren resultierenden Fasern messbar zu beeinflussen. Als Entschäumer kann im erfindungsgemäßen Verfahren grundsätzlich jeder bekannte Entschäumer eingesetzt werden. Vorzugsweise ist der Entschäumer eine Tensid oder eine ein Tesid enthaltende Zusammensetzung.

Bevorzugt ist im erfindungsgemäßen Verfahren die das Tensid enthaltende Zusammensetzung ein Waschmittel.

Der im erfindungsgemäßen Verfahren gegebenenfalls eingesetzte Entschäumer kann in dem mindestens einen hydrophilen Fluid in einem weiten Konzentrationsbereich eingesetzt werden, wobei der Entschäumer in dem mindestens einen hydrophilen Fluid bevorzugt in einer Konzentration von 0,01 bis 3 Gew.-%, besonders bevorzugt in einer Konzentration von 0,1 bis 2 Gew.% und ganz besonders bevorzugt in einer Konzentration von 1 Gew.% vorliegt.

Das Ergebnis der erfindungsgemäßen Entfernung einer wasserunlöslichen Ausrüstung von Aramidfasern wird durch die Bestimmung des Quellwerts der Aramidfasern beurteilt, der wie im folgenden beschrieben ermittelt wird:

Etwa 10 g Aramidfasern, die als Kurzschnitt, Wirrfaser oder als textiles Flächengebilde vorliegen, werden abgewogen, in einem 1 Liter - Becherglas mit 600 ml demineralisiertem Wasser untergetaucht und dort in einem Zustand vollkommener Ruhe, d.h. ohne gerührt, geschüttelt oder in einer anderen Weise bewegt zu werden, für exakt 60 Sekunden (gemessen mit einer Stoppuhr) gelagert. Unmittelbar danach wird der Inhalt des 1 Liter - Becherglases in ein Netz gegossen, das über ein weiteres 1 Liter-Becherglas gespannt ist. Das Netz mit den nassen Aramidfasern wird in einer Zentrifuge plaziert und 120 Sekunden lang (gemessen mit einer Stoppuhr) bei 2800 Umdrehungen pro Minute zentrifugiert. Danach werden die Aramidfasern mit einer Pinzette in ein 250 ml Becherglas überführt, das zuvor auf 0,0001 g genau (= c g) ausgewogen wurde, und das Becherglas mit den Aramidfasern auf 0,0001 genau (= a g) ausgewogen. Das die Aramidfasern enthaltende Becherglas wird 24 h lang in einen Ofen mit einer Temperatur von 105 °C $\pm$ 5 °C gestellt. Danach wird das Becherglas mit den getrockneten Aramidfasern in einen Exsiccator gestellt und 30 Minuten abkühlen gelassen, worauf das Becherglas mit den getrockneten Aramidfasern auf 0,0001 g (=b g) ausgewogen wird. Aus den Gewichten a, b und c wird der Quellwert Q gemäß der Formel

$$Q \ = \ [(a-b)/(b-c)] \cdot 100 \qquad (\%)$$

berechnet, wobei

a das Gewicht des 250 ml Becherglases mit den zentrifugierten, feuchten Fasern,

b das Gewicht des 250 ml Becherglases mit den getrockneten Fasern und

c das Gewicht des leeren 250 ml Becherglases

ist.

Aramidfasern, die als Kurzschnitt, Wirrfaser oder als textiles Flächengebilde vorliegen, zeigen eine Quellwert > 50 %. Ein Quellwert Q ≤ 40 % gilt als Maß für eine hinreichende Entfernung der wasserunlöslichen Ausrüstung.

Die mit dem erfindungsgemäßen Verfahren von einer wasserunlöslichen Ausrüstung befreiten Aramidfasern, die als Kurzschnitt, Wirrfaser oder als textiles Flächengebilde vorliegen, können einer weiteren Verwendung z.B. als Pulpe oder in Abmischung mit anderen Fasern synthetischen oder natürlichen Ursprungs zugeführt werden, wobei die behandelten Aramidfasern vorzugsweise einen Quellwert von ≤ 40 % aufweisen.

In den folgenden Beispielen wird das erfindungsgemäße Verfahren weiter verdeutlicht. Als Ausgangsmaterialien für alle Beispiele dienen Wirrfasern, Kurzschnittfasern > 5 mm oder Gewebe aus p-Aramidfasern, die mit einer wasserblockierenden Präparation ausgerüstet sind, welche Intrasol AFW der Fa. Stockhausen und Span 85 (Sorbitan-Trioleat) der Fa. ICI enthält. Der Quellwert der Ausgangsmaterialien beträgt > 50 %.

**Beispiel 1:**

250 g bis 5 kg der mit der o.g. Präparation ausgerüsteten Wirrfasern, Kurzschnittfasern > 5 mm oder Gewebe aus p-Aramidfasern werden in einem Waschsack in eine handelsübliche Waschmaschine eingebracht. Zur Verminderung des Schäumens wird 1 Gew.-% Persil® bezogen auf das Gewicht der p-Aramidfasern zugesetzt. Anschließend werden die Wirrfasern, Kurzschnittfasern > 5 mm oder Gewebe aus p-Aramidfasern mit dem Kochwaschprogramm gewaschen, geschleudert und getrocknet. Der Quellwert beträgt ≤ 40 %.

**Beispiel 2:**

250 g bis 5 kg der mit der o.g. Präparation ausgerüsteten Wirrfasern, Kurzschnittfasern > 5 mm oder Gewebe aus p-Aramidfasern werden in einem Waschsack in eine handelsübliche Waschmaschine eingebracht. Zur Verminderung des Schäumens wird die Waschmaschine von Beginn des Waschprogramms an mit Wasser betrieben, das eine Temperatur von > 60 °C hat. Dies wird dadurch gewährleistet, dass die Waschmaschine statt an eine Kaltwasserleitung an eine Leitung mit Wasser der Temperatur > 60 °C angeschlossen wird. Die Wirrfasern, Kurzschnittfasern > 5 mm oder Gewebe aus p-Aramidfasern werden mit dem Kochwaschprogramm gewaschen, geschleudert und getrocknet. Der Quellwert beträgt ≤ 40 %.

**Beispiel 3:**

250 g bis 5 kg der mit der o.g. Präparation ausgerüsteten Wirrfasern, Kurzschnittfasern > 5 mm oder Gewebe aus p-Aramidfasern werden in einen Rührreaktor eingebracht, der ein Volumen von ca. 40 l aufweist. Die Wirrfasern, Kurzschnittfasern > 5 mm oder Gewebe aus p-Aramidfasern werden mit DMSO bei Raumtemperatur überschichtet und das DMSO auf 80 °C erhitzt. Danach wird das DMSO abgelassen und das Überschichten mit frischem DMSO, Erhitzen auf 80 °C und Ablassen des DMSO noch viermal wiederholt. Dann werden die Wirrfasern, Kurzschnittfasern > 5 mm oder Gewebe aus p-Aramidfasern gründlich mit Wasser gespült, abgepresst und getrocknet. Der Quellwert beträgt ≤ 40 %.

**Beispiel 4:**

Beispiel 3 wird wiederholt mit dem Unterschied, dass statt reinem DMSO ein DMSO/Wasser-Gemisch eingesetzt wird, wobei die Konzentration von DMSO in Wasser einen Wert im Bereich von 30 bis 100 Gew.-% hat. Der Quellwert beträgt ≤ 40 %.

**Beispiel 5:**

Beispiel 3 wird wiederholt mit dem Unterschied, dass statt reinem DMSO ein $\chi$-Butyrolacton/Wasser-Gemisch eingesetzt wird, wobei die Konzentration von $\chi$-Butyrolacton in Wasser einen Wert im Bereich von 30 bis 100 Gew.-% hat. Der Quellwert beträgt ≤ 40 %.

**Beispiel 6:**

Beispiel 3 wird wiederholt mit dem Unterschied, dass statt reinem DMSO ein Ethanol/Wasser-Gemisch eingesetzt wird, wobei die Konzentration von Ethanol in Wasser einen Wert im Bereich von 25 bis 70 Gew.-% hat und das Ethanol/Wasser-Gemisch auf eine Temperatur im Bereich von 20 bis 60 °C erwärmt wird. Der Quellwert beträgt ≤ 40 %.

**Patentansprüche**

1. Verfahren zur Entfernung einer wasserunlöslichen Ausrüstung von Aramidfasern, **dadurch gekennzeichnet, dass** die Aramidfasern als Kurzschnitt, Wirrfaser oder textiles Flächengebilde vorliegen und mit einem Mittel behandelt werden, das mindestens ein hydrophiles Fluid enthält.

2. Verfahren nach Anspruch 1, **dadurch gekennzeichnet, dass** die wasserunlösliche Ausrüstung der Aramidfasern eine vernetzte waterblocking Ausrüstung ist.

3. Verfahren nach Anspruch 1, **dadurch gekennzeichnet, dass** die wasserunlösliche Ausrüstung der Aramidfasern eine waterrepellant Ausrüstung ist.

4. Verfahren nach einem oder mehreren der Ansprüche 1 bis 3, **dadurch gekennzeichnet, dass** die Aramidfasern aus m- oder p-Aramid bestehen.

5. Verfahren nach einem oder mehreren der Ansprüche 1 bis 4, **dadurch gekennzeichnet, dass** als hydrophiles Fluid Wasser eingesetzt wird.

6. Verfahren nach Anspruch 5, **dadurch gekennzeichnet, dass** das Wasser eine Temperatur im Bereich von 60 bis 120 °C hat.

7. Verfahren nach Anspruch 6, **dadurch gekennzeichnet, dass** das Wasser eine Temperatur im Bereich von 85 bis 110 °C hat.

8. Verfahren nach Anspruch 7, **dadurch gekennzeichnet, dass** das Wasser eine Temperatur von etwa 100 °C hat.

9. Verfahren nach einem oder mehreren der Ansprüche 1 bis 4, **dadurch gekennzeichnet, dass** als hydrophiles Fluid Dimethylsulfoxid oder eine Lösung von Dimethylsulfoxid in Wasser eingesetzt wird.

10. Verfahren nach Anspruch 9, **dadurch gekennzeichnet, dass** die Konzentration von Dimethylsulfoxid in Wasser 30 bis 100 Gew.-% beträgt.

11. Verfahren nach Anspruch 10, **dadurch gekennzeichnet, dass** die Konzentration von Dimethylsulfoxid in Wasser 70 bis 100 Gew.-% beträgt.

12. Verfahren nach einem oder mehreren der Ansprüche 9 bis 11, **dadurch gekennzeichnet, dass** die Temperatur des Dimethylsulfoxids oder seiner wässrigen Lösung 20 bis 140 °C beträgt.

13. Verfahren nach Anspruch 12, **dadurch gekennzeichnet, dass** die Temperatur des Dimethylsulfoxids oder seiner wässrigen Lösung 70 bis 110 °C beträgt.

14. Verfahren nach einem oder mehreren der Ansprüche 1 bis 4, **dadurch gekennzeichnet, dass** als hydrophiles Fluid eine wässrige Lösung eines aliphatischen cyclischen Esters mit 2 bis 4 Alkylengruppen eingesetzt wird.

15. Verfahren nach Anspruch 14, **dadurch gekennzeichnet, dass** der aliphatische cyclische Ester $\chi$-Butyrolacton ist.

16. Verfahren nach Anspruch 14 oder 15, **dadurch gekennzeichnet, dass** die Konzentration des aliphatischen cyclischen Esters in Wasser 30 bis 80 Gew.-% beträgt.

17. Verfahren nach Anspruch 16, **dadurch gekennzeichnet, dass** die Konzentration des aliphatischen cyclischen Esters in Wasser 50 bis 70 Gew.-% beträgt.

18. Verfahren nach einem oder mehreren der Ansprüche 14 bis 17, **dadurch gekennzeichnet, dass** die Temperatur der wässrigen Lösung des aliphatischen cyclischen Esters 20 bis 90 °C beträgt.

19. Verfahren nach Anspruch 18, **dadurch gekennzeichnet, dass** die Temperatur der wässrigen Lösung des aliphatischen cyclischen Esters 60 bis 90 °C beträgt.

20. Verfahren nach einem oder mehreren der Ansprüche 1 bis 4, **dadurch gekennzeichnet, dass** als hydrophiles Fluid eine wässrige Lösung mindestens eines aliphatischen Alkohols mit 1 bis 5 Kohlenstoffatomen eingesetzt wird.

21. Verfahren nach Anspruch 20, **dadurch gekennzeichnet, dass** als aliphatischer Alkohol Methanol, Ethanol, 1-Propanol, Isopropylalkohol, 1-Butanol, Isobutylalkohol, 2-Butanol, tert. Butanol, 1-Pentanol, 2-Pentanol, 3-Pentanol oder 2,2-Dimethyl-1-propanol einzeln oder im Gemisch eingesetzt wird.

22. Verfahren nach Anspruch 20 oder 21, **dadurch gekennzeichnet, dass** die Konzentration des aliphatischen Alkohols in Wasser 25 bis 70 Gew.-% beträgt.

23. Verfahren nach Anspruch 22, **dadurch gekennzeichnet, dass** die Konzentration des aliphatischen Alkohols in Wasser 40 bis 70 Gew.-% beträgt.

24. Verfahren nach einem oder mehreren der Ansprüche 10 bis 23, **dadurch gekennzeichnet, dass** die Temperatur der wässrigen Lösung des aliphatischen Alkohols 20 bis 60 °C beträgt.

25. Verfahren nach Anspruche 24, **dadurch gekennzeichnet, dass** die Temperatur der wässrigen Lösung des aliphatischen Alkohols 40 bis 60 °C beträgt.

26. Verfahren nach einem oder mehreren der Ansprüche 1 bis 25, **dadurch gekennzeichnet, dass** die Aramidfasern in mindestens einem hydrophilen Lösungsmittel, das gegebenenfalls einem Entschäumer enthält, gerührt werden.

27. Verfahren nach einem oder mehreren der Ansprüche 1 bis 25, **dadurch gekennzeichnet, dass** die Aramidfasern im Waschgang einer Waschmaschine behandelt werden.

28. Verfahren nach einem oder mehreren der Ansprüche 1 bis 8, **dadurch gekennzeichnet, dass** die Aramidfasern als textiles Flächengebilde vorliegen und mit einem Wasserdampfstrahl behandelt werden.

29. Verfahren nach einem oder mehreren der Ansprüche 1 bis 28, **dadurch gekennzeichnet, dass** das Gewichtsverhältnis von Aramidfasern zu dem mindestens einen hydrophilen Fluid 1:14 bis 1:1 beträgt.

30. Verfahren nach Anspruch 29, **dadurch gekennzeichnet, dass** das Gewichtsverhältnis von Aramidfasern zu dem mindestens einen hydrophilen Fluid 1:14 bis 1:6 beträgt.

31. Verfahren nach einem oder mehreren der Ansprüche 1 bis 30, **dadurch gekennzeichnet, dass** das Mittel, mit dem die Aramidfasern behandelt werden, einen Entschäumer enthält.

32. Verfahren nach Anspruch 31, **dadurch gekennzeichnet, dass** der Entschäumer ein Tensid oder eine ein Tensid enthaltende Zusammensetzung ist.

33. Verfahren nach Anspruch 32, **dadurch gekennzeichnet, dass** die das Tensid enthaltende Zusammensetzung ein Waschmittel ist.

34. Verfahren nach einem oder mehreren der Ansprüche 1 bis 33, **dadurch gekennzeichnet, dass** der Entschäumer in dem mindestens einen hydrophilen Fluid in einer Konzentration von 0,01 bis 3 Gew.-% vorliegt.

35. Verfahren nach Anspruch 34, **dadurch gekennzeichnet, dass** der Entschäumer in dem mindestens einen hydrophilen Fluid in einer Konzentration von 0,1 bis 2 Gew.-% vorliegt.

36. Verfahren nach Anspruch 35, **dadurch gekennzeichnet, dass** der Entschäumer in dem mindestens einen hydrophilen Fluid in einer Konzentration von 1 Gew.-% vorliegt.

37. Verwendung der gemäß einem oder mehreren der Ansprüche 1 bis 36 behandelten Aramidfasern als Pulpe oder in Abmischung mit anderen Fasern synthetischen oder natürlichen Ursprungs.

38. Verwendung gemäß Anspruch 37, **dadurch gekennzeichnet, dass** die behandelten Aramidfasern einen Quellwert von ≤ 40 % aufweisen.

**Claims**

1. A procedure for removing a water-insoluble finish from aramide fibers, **characterized in that** the aramide fibers are present as a short-cut, random fiber or flat textile material, and are treated with an agent that contains at least one hydrophilic fluid.

2. The procedure according to claim 1, **characterized in that** the water-insoluble finish of the aramide fibers is a cross-linked water-blocking finish.

3. The procedure according to claim 1, **characterized in that** the water-insoluble finish of the aramide fibers is a water-repellant finish.

4. The procedure according to one or more of claims 1 to 3, **characterized in that** the aramide fibers consist of m or p-aramide.

5. The procedure according to one or more of claims 1 to 4, **characterized in that** water is used as the hydrophilic fluid.

6. The procedure according to claim 5, **characterized in that** the water has a temperature ranging from 60 to 120 °C.

7. The procedure according to claim 6, **characterized in that** the water has a temperature ranging from 85 to 110 °C.

8. The procedure according to claim 7, **characterized in that** the water has a temperature of about 100 °C.

9. The procedure according to one or more of claims 1 to 4, **characterized in that** dimethyl sulfoxide or a solution of dimethyl sulfoxide in water is used as the hydrophilic fluid.

10. The procedure according to claim 9, **characterized in that** the concentration of dimethyl sulfoxide in water measures 30 to 100 %w/w.

11. The procedure according to claim 10, **characterized in that** the concentration of dimethyl sulfoxide in water measures 70 to 100 %w/w.

12. The procedure according to one or more of claims 9 to 11, **characterized in that** the temperature of the dimethyl sulfoxide or its aqueous solution measures 20 to 140 °C.

13. The procedure according to claim 12, **characterized in that** the temperature of the dimethyl sulfoxide or its aqueous solution measures 70 to 110 °C.

14. The procedure according to one or more of claims 1 to 4, **characterized in that** an aqueous solution of an aliphatic cyclic ester with 2 to 4 alkylene groups is used as the hydrophilic fluid.

15. The procedure according to claim 14, **characterized in that** the aliphatic cyclic ester is χ-butyrolactone.

16. The procedure according to claim 14 or 15, **characterized in that** the concentration of the aliphatic cyclic ester in water measures 30 to 80 %w/w.

17. The procedure according to claim 16, **characterized in that** the concentration of the aliphatic cyclic ester in water measures 50 to 70 %w/w.

18. The procedure according to one or more of claims 14 to 17, **characterized in that** the temperature of the aqueous solution of the aliphatic cyclic ester measures 20 to 90 °C.

19. The procedure according to claim 18, **characterized in that** the temperature of the aqueous solution of the aliphatic cyclic ester measures 60 to 90 °C.

20. The procedure according to one or more of claims 1 to 4, **characterized in that** an aqueous solution of at least one aliphatic alcohol with 1 to 5 carbon atoms is used as the hydrophilic fluid.

21. The procedure according to claim 20, **characterized in that** the aliphatic alcohol used is methanol, ethanol, 1-propanol, isopropyl alcohol, 1-butanol, isobutyl alcohol, 2-butanol, tert. butanol, 1-pentanol, 2-pentanol, 3-pentanol or 2.2-dimethyl-1-propanol individually or in mixtures.

22. The procedure according to claim 20 or 21, **characterized in that** the concentration of the aliphatic alcohol in water measures 25 to 70 %w/w.

23. The procedure according to claim 22, **characterized in that** the concentration of the aliphatic alcohol in water measures 40 to 70 %w/w.

24. The procedure according to one or more of claims 10 to 23, **characterized in that** the temperature of the aqueous solution of the aliphatic alcohol measures 20 to 60 °C.

25. The procedure according to claim 24, **characterized in that** the temperature of the aqueous solution of the aliphatic alcohol measures 40 to 60 °C.

26. The procedure according to one or more of claims 1 to 25, **characterized in that** the aramide fibers are stirred in at least one hydrophilic solvent that optionally can contain a defoamer.

27. The procedure according to one or more of claims 1 to 25, **characterized in that** the aramide fibers are treated in the wash cycle of a washing machine.

28. The procedure according to one or more of claims 1 to 8, **characterized in that** the aramide fibers are present as a flat textile material, and are treated with a water vapor jet.

29. The procedure according to one or more of claims 1 to 28, **characterized in that** the weight ratio of aramide fibers to the at least one hydrophilic fluid measures 1:14 to 1:1.

30. The procedure according to claim 29, **characterized in that** the weight ratio of aramide fibers to the at least one hydrophilic fluid measures 1:14 to 1:6.

31. The procedure according to one or more of claims 1 to 30, **characterized in that** the agent used to treat the aramide fibers contains a defoamer.

32. The procedure according to claim 31, **characterized in that** the defoamer is a surfactant or a surfactant-containing composition.

33. The procedure according to claim 32, **characterized in that** the surfactant-containing composition is a detergent.

**34.** The procedure according to one or more of claims 1 to 33, **characterized in that** the defoamer in the at least one hydrophilic fluid is present in a concentration of 0.01 to 3 %w/w.

**35.** The procedure according to claim 34, **characterized in that** the defoamer in the at least one hydrophilic fluid is present in a concentration of 0.1 to 2 %w/w.

**36.** The procedure according to claim 35, **characterized in that** the defoamer in the at least one hydrophilic fluid is present in a concentration of 1 %w/w.

**37.** Use of aramide fibers treated according to one or more of claims 1 to 36 as a pulp or in mixture with other fibers of a synthetic or natural origin.

**38.** Use according to claim 37, **characterized in that** the treated aramide fibers have a swelling value of ≤ 40 %.

**Revendications**

**1.** Procédé pour l'élimination d'un apprêt insoluble dans l'eau de fibres d'aramide, **caractérisé en ce que** les fibres d'aramide se trouvent sous forme de fibres coupées, de fibres enchevêtrées ou d'article plat textile et sont traitées par une composition qui contient au moins un fluide hydrophile.

**2.** Procédé selon la revendication 1, **caractérisé en ce que** l'apprêt insoluble dans l'eau des fibres d'aramide est un apprêt réticulé imperméable à l'eau.

**3.** Procédé selon la revendication 1, **caractérisé en ce que** l'apprêt insoluble dans l'eau des fibres d'aramide est un apprêt hydrofuge.

**4.** Procédé selon une ou plusieurs des revendications 1 à 3, **caractérisé en ce que** les fibres d'aramide sont constituées de m- ou p-aramide.

**5.** Procédé selon une ou plusieurs des revendications 1 à 4, **caractérisé en ce qu'**on utilise l'eau en tant que fluide hydrophile.

**6.** Procédé selon la revendication 5, **caractérisé en ce que** l'eau est à une température dans la plage de 60 à 120°C.

**7.** Procédé selon la revendication 6, **caractérisé en ce que** l'eau est à une température dans la plage de 85 à 110°C.

**8.** Procédé selon la revendication 7, **caractérisé en ce que** l'eau est à une température d'environ 100°C.

**9.** Procédé selon une ou plusieurs des revendications 1 à 4, **caractérisé en ce qu'**on utilise comme fluide hydrophile le diméthylsulfoxyde ou une solution de diméthylsulfoxyde dans l'eau.

**10.** Procédé selon la revendication 9, **caractérisé en ce que** la concentration du diméthylsulfoxyde dans l'eau vaut de 30 à 100 % en poids.

**11.** Procédé selon la revendication 10, **caractérisé en ce que** la concentration du diméthylsulfoxyde dans l'eau vaut de 70 à 100 % en poids.

**12.** Procédé selon une ou plusieurs des revendications 9 à 11, **caractérisé en ce que** la température du diméthylsulfoxyde ou de sa solution aqueuse est dans la plage de 20 à 140°C.

**13.** Procédé selon la revendication 12, **caractérisé en ce que** la température du diméthylsulfoxyde ou de sa solution aqueuse est dans la plage de 70 à 110°C.

**14.** Procédé selon une ou plusieurs des revendications 1 à 4, **caractérisé en ce qu'**on utilise comme fluide hydrophile une solution aqueuse d'un ester cyclique aliphatique comportant de 2 à 4 groupes alkylène.

**15.** Procédé selon la revendication 14, **caractérisé en ce que** l'ester cyclique aliphatique est la χ-butyrolactone.

**16.** Procédé selon la revendication 14 ou 15, **caractérisé en ce que** la concentration de l'ester cyclique aliphatique dans l'eau vaut de 30 à 80 % en poids.

**17.** Procédé selon la revendication 16, **caractérisé en ce que** la concentration de l'ester cyclique aliphatique dans l'eau vaut de 50 à 70 % en poids.

**18.** Procédé selon une ou plusieurs des revendications 14 à 17, **caractérisé en ce que** la température de la solution aqueuse de l'ester cyclique aliphatique est de 20 à 90°C.

**19.** Procédé selon la revendication 18, **caractérisé en ce que** la température de la solution aqueuse de l'ester cyclique aliphatique est de 60 à 90°C.

**20.** Procédé selon une ou plusieurs des revendications 1 à 4, **caractérisé en ce qu'**on utilise comme fluide hydrophile une solution aqueuse d'au moins un alcool aliphatique ayant de 1 à 5 atomes de carbone.

**21.** Procédé selon la revendication 20, **caractérisé en ce qu'**on utilise comme alcool aliphatique le méthanol, l'éthanol, le 1-propanol, l'alcool isopropylique, le 1-butanol, l'alcool isobutylique, le 2-butanol, le tert-butanol, le 1-pentanol, le 2-pentanol, le 3-pentanol ou le 2,2-diméthyl-1-propanol, seuls ou en mélange.

**22.** Procédé selon la revendication 20 ou 21, **caractérisé en ce que** la concentration de l'alcool aliphatique dans l'eau vaut de 25 à 70 % en poids.

**23.** Procédé selon la revendication 22, **caractérisé en ce que** la concentration de l'alcool aliphatique dans l'eau vaut de 40 à 70 % en poids.

**24.** Procédé selon une ou plusieurs des revendications 10 à 23, **caractérisé en ce que** la température de la solution aqueuse de l'alcool aliphatique est dans la plage de 20 à 60°C.

**25.** Procédé selon la revendication 24, **caractérisé en ce que** la température de la solution aqueuse de l'alcool aliphatique est dans la plage de 40 à 60°C.

**26.** Procédé selon une ou plusieurs des revendications 1 à 25, **caractérisé en ce qu'**on agite les fibres d'aramide dans au moins un solvant hydrophile qui contient éventuellement un antimousse.

**27.** Procédé selon une ou plusieurs des revendications 1 à 25, **caractérisé en ce que** les fibres d'aramide sont traitées dans le cycle de lavage d'une machine à laver.

**28.** Procédé selon une ou plusieurs des revendications 1 à 8, **caractérisé en ce que** les fibres d'aramide se trouvent sous forme d'article plat textile et sont traitées par un jet de vapeur d'eau.

**29.** Procédé selon une ou plusieurs des revendications 1 à 28, **caractérisé en ce que** le rapport pondéral des fibres d'aramide audit au moins un fluide hydrophile vaut de 1:14 à 1:1.

**30.** Procédé selon la revendications 29, **caractérisé en ce que** le rapport pondéral des fibres d'aramide audit au moins un fluide hydrophile vaut de 1:14 à 1:6.

**31.** Procédé selon une ou plusieurs des revendications 1 à 30, **caractérisé en ce que** la composition par laquelle sont traitées les fibres d'aramide contient un antimousse.

**32.** Procédé selon la revendication 31, **caractérisé en ce que** l'antimousse est un tensioactif ou une composition contenant un tensioactif.

**33.** Procédé selon la revendication 32, **caractérisé en ce que** la composition contenant le tensioactif est un produit lessiviel.

**34.** Procédé selon une ou plusieurs des revendications 1 à 33, **caractérisé en ce que** l'antimousse est présent à une concentration de 0,01 à 3 % en poids dans ledit au moins un fluide hydrophile.

**35.** Procédé selon la revendication 34, **caractérisé en ce que** l'antimousse est présent à une concentration de 0,1 à 2 % en poids dans ledit au moins un fluide hydrophile.

**36.** Procédé selon la revendication 35, **caractérisé en ce que** l'antimousse est présent à une concentration de 1 % en poids dans ledit au moins un fluide hydrophile.

**37.** Utilisation des fibres d'aramide traitées selon une ou plusieurs des revendications 1 à 36, en tant que pâte à papier ou en mélange avec d'autres fibres synthétiques ou d'origine naturelle.

**38.** Utilisation selon la revendication 37, **caractérisée en ce que** les fibres d'aramide traitées ont un indice de gonflement de ≤ 40 %.